# EUROPEAN PATENT SPECIFICATION

(11) **EP 0 504 466 B1**
(45) Date of publication and mention of the grant of the patent: **18.11.1993**
(21) Application number: 91104518.5
(22) Date of filing: 22.03.1991
(51) Int. Cl.: B26D 7/30

(54) **Cutting apparatus and process**
Verfahren und Vorrichtung zum Schneiden
Procédé et dispositif de coupe

(43) Date of publication of application: 23.09.1992
(73) Proprietor: FRISCO-FINDUS AG, CH-9400 Rorschach (CH)
(72) Inventor: Pegoraro, Giuliano, S-267 00 Bjuv (SE)

(56) References cited:
- EP-A- 0 235 322
- EP-A- 0 288 592

## Description

The present invention relates to an apparatus and a process for the automatic cutting of meat or fish to produce portions of a predetermined constant weight.

In the production of packaged frozen meat or fish products, it is important that the weight of the portions is controlled as accurately as possible, otherwise the weights will vary at the time of filling the packages resulting in certain disadvantages: underweight portions of incorrect weight have to be rejected leading to significant losses of fish or meat material while overweight portions have to be adjusted to the correct weight, which increases the costs.

The most reliable way of ensuring a constant weight is by cutting and weighing the portions manually. However, this is labour intensive and very time-consuming. Mechanical means for automatic and semi-automatic cutting and weighing of portions have been described but these generally involve the use of very complex, expensive machinery. For example, the use of photoelectric sensors has been proposed to detect the linear measurements of fish but since not only the length, but also the breadth and thickness vary appreciably, this method would not lead to the cutting of portions with an accurate constant weight. EP-A-288592 describes an apparatus and process for the automatic cutting of fish to produce portions of a predetermined weight where fish is fed onto the infeed end of three successive conveyor belts, the upstream conveyor belt forming the load bearing platform of a weighting machine which continuously records the weight of the fish, information is fed to a computer preprogrammed for the predetermined weight which activates a cutting device to cut the fish. In our co-pending European Patent Application EP-A- 0235 322 we have described and claimed an apparatus and process for the automatic cutting of meat or fish material to produce portions of a predetermined constant weight, comprising a pair of adjacent parallel conveyors suitable for transporting a meat or fish material lying partly on each conveyor, a weighing machine and a movable cutting device characterised in that the parallel conveyors are adapted to travel in the same direction at substantially the same speed and that at least part of one of the parallel conveyors is adapted to form the load-bearing platform of the weighing machine, the weighing machine being adapted to weigh the material on the load-bearing platform and the cutting device being adapted to move transversely relative to the direction of movement of the conveyors, the direction and distance of the transverse movement being controlled by the weight recorded on the weighing machine, and then to cut the material parallel to the direction of movement.

This method is very reliable provided that the thickness of the meat or fish material does not vary too much. However, when there are wide variations in the thickness of the meat or fish pieces, it is rather difficult to maintain a constant weight.

We have now developed an improvement to this apparatus and method in which the fish or meat is cut transversely to the direction of movement and, surprisingly, enables fish and meat pieces having widely varying thicknesses to be cut automatically to a predetermined constant weight.

Accordingly, the present invention provides an appartus for the automatic cutting of meat or fish material to produce portions of a predetermined constant weight comprising three successive conveyor belts, the upstream conveyor belt forming the load-bearing platform of a weighing machine adapted to continuously record the weight of the meat or fish material, a computer, means for feeding the recorded information and the predetermined weight to the computer, and a cutting device positioned adjacent a gap between the intermediate and downstream conveyor belts transversely to the direction of movement of the conveyor belts, adapted to be activated by the computer to cut the meat or fish material at the appropriate position, characterised in that a photocell is adapted to be activated by the meat or fish and give a signal to the computer to record the total weight of the meat or fish material on the upstream conveyor belt, and a tachometer is adapted to record the velocity of the intermediate conveyor belt.

There should be only one item of fish or meat material on the upstream conveyor belt at any one time.

The conveyor belts are conveniently endless belts. The conveyor belt forming the load-bearing platform of the weighing machine is conveniently fixed to the weighing machine via the axles of the rollers.

The weighing machine is conveniently of the type consisting of continuously working seales based on load cells, or it may be a spring balance.

The movement of the cutting device through the gap between the conveyor belts may be achieved by a step motor which is actuated by the computer based on the recorded information fed to it. Any kind of cutting device may be used, for example, a jet cutter, a knife or sword, preferably a rotatable sword. The gap between the conveyor belts is conveniently from 5 to 10 mm to enable the cutting device to pass through.

The tachometer may advantageously be an incremental encoder having a set number of pulses per revolution, for example, from 100 to 2000 pulses per revolution. The number of pulses per revolution is preset in the computer.

The present invention also provides a process for the automatic cutting of meat or fish material to produce portions of a predetermined constant weight which comprises feeding a meat or fish material onto the infeed end of three successive conveyor belts, the upstream conveyor belt being adapted to form the load-bearing platform of a weighing machine which continuously records the weight of the material advancing on the upstream conveyor belt, information is fed to a computer previously preprogrammed for the predetermined weight which actuates a cutting device positioned transversely to the direction of movement of the conveyor belt adjacent a gap between the downstream conveyor belts to cut the meat or fish material at the appropriate position, characterised in that a photocell is activated by the meat or fish and gives a signal to the computer to record the total weight of meat or fish material as it passes from the upstream conveyor belt to the intermediate belt, and a tachometer records the velocity of the intermediate conveyor belt to provide the information which is fed to the computer.

The present invention is applicable to meat and fish materials of all sizes and shapes, for example cod or salmon. The invention is particularly suitable for cutting fish tails and loins having a weight between about 100 g to 175 g, but is also applicable for cutting fillets weighing up to 700 g.

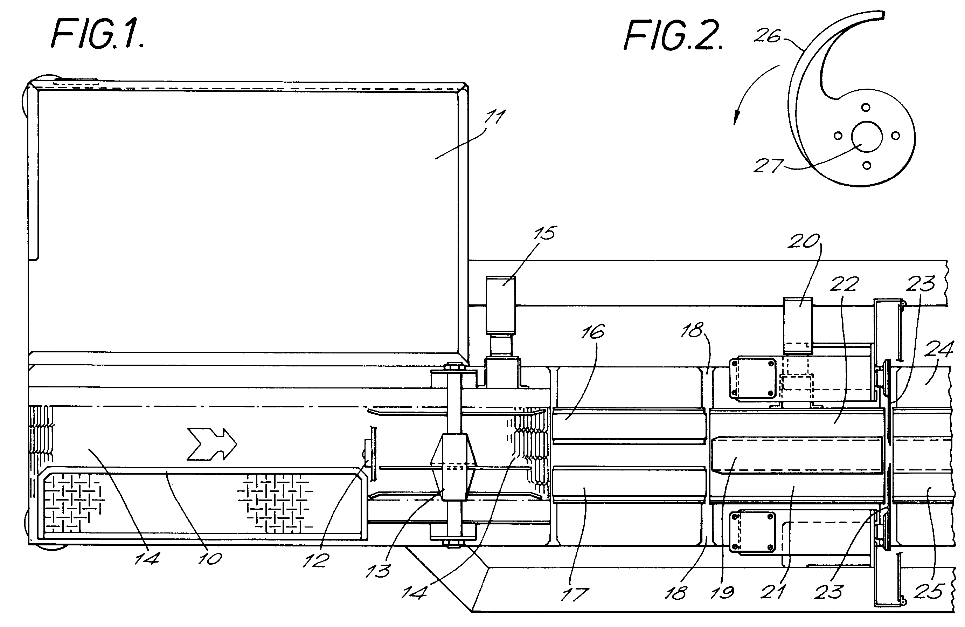

The present invention will now be illustrated by way of example with reference to the accompanying drawing in which Figure 1 represents a diagrammatic top plan view of an apparatus and Figure 2 represents a side view of a cutting device.

Referring to the drawings, the apparatus comprises a guide 10, a cabinet 11 for the electrical machinary including a computer (not shown), a photocell 12, a pusher 13, a mesh infeed conveyor 14, belt motors 15, weighing belts 16, 17, a photocell 18, guide support 19, a tachometer 20 having 500 pulses per revolution, intermediate belts 21, 22, cutting devices 23 and outfeed belts 24, 25. A cutting device 23 is shown in Figure 2 as a sword having a curved blade 26 and rotatable on an axis 27.

In operation, cod fillets are fed onto the infeed mesh conveyor 14 in a single row guided by the guide 10 and travel in the direction of the arrow until they reach photocell 12 which gives a signal to the pusher 13 to separate the fillets alternatively into two rows travelling one at a time on weighing belts 16 and 17. The computer is preprogrammed for the predetermined weight and the number of pulses per revolution of the tachometer. The weight of the cod fillets is continuously recorded on the weighing belts 16 and 17 and when the cod fillets pass from the weighing belts to the intermediate belts 21 and 22 the photocell 18 is activated and gives a signal to the computer to record the total weight of each cod fillet. The velocity of the belts 21 and 22 is recorded by the tachometer 20 and all this information on weight and velocity is fed to the computer. As the cod fillets pass gardually onto the intermediate belts 21 and 22 the weighing belts record the loss in weight of the cod fillets. When the appropriate predetermined weight of each cod fillet is reached on belts 21 and 22 this information is fed to the computer. Since the velocity of belts 21 and 22 has also been fed to the computer, the computer will actuate the sword 23, at the appropriate position on the cod fillets as they cross the gap between belts 21, 22 and outfeed belts 24, 25 while being guided by the guide support 19, to rotate one turn and cut through the cod fillets to obtain pieces of the desired predetermined weight. The cut pieces are transported on belts 24, 25 to the next stage.

## Claims

1. An apparatus for the automatic cutting of meat or fish material to produce portions of a predetermined constant weight comprising three successive conveyor belts, (16,17:21,22:24,25) the upstream conveyor belt (16,17) forming the load-bearing platform of a weighing machine adapted to continuously record the weight of the meat or fish material, a computer, means for feeding the recorded information and the predetermined weight to the computer, and a cutting device (23) positioned adjacent a gap between the intermediate (21,22) and downstream (24,25) conveyor belts transversely to the direction of movement of the conveyor belts, adapted to be activated by the computer to cut the meat or fish material at the appropriate position, characterised in that a photocell (18) is adapted to be activated by the fish and give a signal to the computer to record the total weight of the meat or fish material on the upstream conveyor belt, (16,17) and a tachometer (20) is adapted to record the velocity of the intermediate conveyor belt.

2. An apparatus according to claim 1 wherein the weighing machine is of the type consisting of continuously working scales based on load cells.

3. An apparatus according to claim 1 wherein the cutting device (23) is a rotatable knife or sword.

4. An apparatus according to claim 1 wherein the tachometer (20) is an incremental encoder having a set number of pulses per revolution.

5. An apparatus according to claim 4 wherein the number of pulses per revolution is preset in the computer.

6. A process for the automatic cutting of meat or fish material to produce portions of a predetermined constant weight which comprises feeding a meat or fish material onto the infeed end of three successive conveyor belts, (16,17:21,22:24,25) the upstream conveyor belt (16,17) being adapted to form the load-bearing platform of a weighing machine which continuously records the weight of the material advancing on the upstream conveyor belt, information is fed to a computer previously preprogrammed for the predetermined weight which activates a cutting device (23) positioned transversely to the direction of movement of the conveyor belts adjacent a gap between the intermediate (21,22) and downstream (24,25) conveyor belts to cut the meat or fish material at the appropriate position, characterised in that a photocell is activated by the meat or fish and gives a signal to the computer to record the total weight of meat or fish material as it passes from the upstream conveyor belt to the intermediate belt, and a tachometer records the velocity of the intermediate conveyor belt to provide the information which is fed to the computer.

## Patentansprüche

1. Vorrichtung zum automatischen Schneiden von Fleisch- oder Fischmaterial zwecks Herstellung von Portionen eines vorbestimmten konstanten Gewichts, mit drei aufeinanderfolgenden Förderbändern (16,17; 21,22; 24,25), wobei das stromaufwärtige Förderband (16,17) die lasttragende Plattform einer zum kontinuierlichen Registrieren des Gewichts des Fleisch- oder Fischmaterials ausgebildeten Wiegeeinrichtung bildet, einem Computer, einer Einrichtung zum Eingeben der registrierten Informationen und des vorbestimmten Gewichts in den Computer, und einer nahe einem Zwischenraum zwischen dem mittleren (21,22) und dem stromabwärtigen (24,25) Förderband quer zur Bewegungsrichtung der Förderbänder angeordneten Schneideinrichtung (23), die so ausgebildet ist, daß sie durch den Computer aktiviert wird, das Fleischoder Fischmaterial an der bestimmten Stelle zu schneiden, dadurch gekennzeichnet, daß eine Fotozelle (18) vorgesehen ist, die durch das Fleischoder Fischmaterial aktivierbar ist und ein Signal zum Computer gibt, das Gesamtgewicht des Fleisch- oder Fischmaterials auf dem stromaufwärtigen Förderband (16,17) zu speichern, und daß ein Geschwindigkeitsmesser (20) vorgesehen ist, die Geschwindigkeit des mittleren Förderbandes zu registrieren.

2. Vorrichtung nach Anspruch 1, in welcher die Wiegeeinrichtung von der Ausführung ist, die aus kontinuierlich arbeitenden, auf Kraftmeßdosen beruhenden Waagen besteht.

3. Vorrichtung nach Anspruch 1, in welcher die Schneideinrichtung (23) ein drehbares Messer oder eine Klinge ist.

4. Vorrichtung nach Anspruch 1, in welcher der Geschwindigkeitsmesser (20) ein Inkremental-Meßgeber mit einer vorgegebenen Anzahl von Impulsen pro Umdrehung ist.

5. Vorrichtung nach Anspruch 4, in welcher die Anzahl von Impulsen pro Umdrehung im Computer voreingestellt ist.

6. Verfahren zum automatischen Schneiden von Fleisch- oder Fischmaterial zwecks Herstellung von Portionen eines vorbestimmten konstanten Gewichts, mit dem Aufbringen eines Fleisch- oder Fischmaterials auf das Beschickungsende dreier aufeinanderfolgender Förderbänder (16,17; 21,22; 24,25), wobei das stromaufwärtige Förderband (16,17) so ausgebildet ist, daß es die lasttragende Plattform einer Wiegeeinrichtung bildet, die das Gewicht des sich auf dem stromaufwärtigen Förderband vorwärtsbewegenden Materials kontinuierlich registriert, wobei Informationen in einen vorhergehend auf das vorbestimmte Gewicht vorprogrammierten Computer eingegeben werden, der eine nahe einem Zwischenraum zwischen dem mittleren (21,22) und dem stromabwärtigen (24,25) Förderband quer zur Bewegungsrichtung der Förderbänder angeordnete Schneideinrichtung (23) aktiviert, das Fleisch- oder Fischmaterial an der bestimmten Stelle zu schneiden, dadurch gekennzeichnet, daß eine Fotozelle durch das Fleisch- oder Fischmaterial aktiviert wird und ein Signal zum Computer gibt, das Gesamtgewicht des Fleisch- oder Fischmaterials beim Übergang vom stromaufwärtigen Förderband zum mittleren Förderband zu speichern, und daß ein Geschwindigkeitsmesser die Geschwindigkeit des mittleren Förderbandes registriert, um die Information bereitzustellen, die in den Computer eingegeben wird..

## Revendications

1. Appareil pour la coupe automatique de viande ou de poisson afin de produire des portions d'un poids constant prédéterminé, comportant trois bandes transporteuses successives (16, 17 ; 21, 22 ; 24, 25), la bande transporteuse d'amont (16, 17) formant la plate-forme de charge d'une machine de pesage destinée à enregistrer en continu le poids de la viande ou du poisson, un calculateur, des moyens pour appliquer au calculateur l' information enregistrée et le poids prédéterminé, et un dispositif de coupe (23) placé à proximité immédiate d'un intervalle entre les bandes transporteuses intermédiaires (21, 22) et d'aval (24, 25), transversalement à la direction du mouvement des bandes transporteuses, et destiné à être mis en action par le calculateur pour couper la viande ou le poisson dans la position appropriée, caractérisé en ce qu'une cellule photo-électrique (18) est destinée à être activée par le poisson et à transmettre un signal au calculateur pour enregistrer le poids total de la viande ou du poisson sur la bande transporteuse d'amont (16, 17), et un tachymètre (20) est destiné à enregistrer la vitesse de la bande transporteuse intermédiaire.

2. Appareil selon la revendication 1, dans lequel la machine de pesage est du type constitué de balances travaillant en continu sur la base de cellules de charge.

3. Appareil selon la revendication 1, dans lequel le dispositif de coupe (23) est une lame ou un couteau rotatif.

4. Appareil selon la revendication 1, dans lequel le tachymètre (20) est un codeur incrémentiel ayant un nombre établi d'impulsions par tour.

5. Appareil selon la revendication 4, dans lequel le nombre d'impulsions par tour est pré-établi dans le calculateur.

6. Procédé pour la coupe automatique de viande ou de poisson afin de produire des portions d'un poids constant prédéterminé, qui consiste à amener de la viande ou du poisson sur l'extrémité de chargement de trois bandes transporteuses successives (16, 17 ; 21, 22 ; 24, 25), la bande transporteuse d'amont (16, 17) étant destinée à former la plate-forme de charge d'une machine de pesage qui enregistre en continu le poids de la matière avançant sur la bande transporteuse d'amont, une information est envoyée à un calculateur pré-programmé à l'avance pour le poids prédéterminé, lequel met en action un dispositif de coupe (23) placé transversalement à la direction du mouvement des bandes transporteuses à proximité immédiate d'un intervalle entre les bandes transporteuses intermédiaires (21, 22) et d'aval (24, 25) afin de couper la viande ou le poisson dans la position appropriée, caractérisé en ce qu'une cellule photo-électrique est activée par la viande ou le poisson et transmet un signal au calculateur pour enregistrer le poids total de viande ou de poisson à son passage de la bande transporteuse d'amont à la bande intermédiaire, et un tachymètre enregistre la vitesse de la bande transporteuse intermédiaire pour produire l'information qui est envoyée au calculateur.
